(19) Europäisches Patentamt / European Patent Office / Office européen des brevets

(11) EP 4 610 292 A1

(12) EUROPEAN PATENT APPLICATION

(43) Date of publication:
**03.09.2025 Bulletin 2025/36**

(21) Application number: **24160049.3**

(22) Date of filing: **27.02.2024**

(51) International Patent Classification (IPC):
***C08G 63/60*** *(2006.01)*

(52) Cooperative Patent Classification (CPC):
(C-Sets available)
**C08G 63/605; C08K 3/013** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sumitomo Chemical Co., Ltd.**
**Tokyo 103-6020 (JP)**

(72) Inventors:
- **POWELL, Chad**
  **ALPHARETTA (GA), 30005-3914 (US)**
- **BENSON, Bryan**
  **Apharetta (GA), 30005-3914 (US)**

(74) Representative: **Vossius & Partner**
**Patentanwälte Rechtsanwälte mbB**
**Siebertstraße 3**
**81675 München (DE)**

# (54) LIQUID CRYSTALLINE POLYESTER COMPRISING A BRANCH MONOMER

(57) The present disclosure relates to a polyester comprising the recurring units (RU1)-(RU4) and having in reacted form at least one monomer of formula (I):

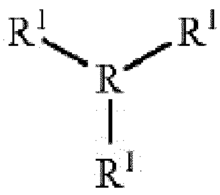

(I)

where $R^1$ is COOH and R is an aryl group, a heteroaryl group or a cycloalkyl group, the proportion of this monomer in the polyester being between 0.10 and 1.0 mol% (this latter value being excluded).

EP 4 610 292 A1

(52) Cooperative Patent Classification (CPC): (Cont.)

C-Sets
**C08K 3/013, C08L 67/00**

## Description

### [Technical Field]

The present disclosure relates to a composition comprising a polyester (PE) exhibiting a combination of physico-chemical properties, making them well-suited for the preparation of a copper clad laminate (CCL).

### [Background art]

Several documents disclose liquid crystalline polymers (LCPs).

US 10,654,969 discloses a thin film comprising a polymer formed by reacting p-hydroxybenzoic acid, 6-hydroxy 2-naphthoic acid and a branched monomer such as trimesic acid, the molar ratio branched monomer / other monomers being between 0.25/100 and 0.5/100 and wherein the inherent viscosity of the polymer is between 4 and 6 dL/g. There is no disclosure of the crystallization temperature Tc.

US 4,710,547 discloses a process for producing a three-dimensionally crosslinked polyester prepared from a polyfunctional monomer. The two following monomers are used in the examples:

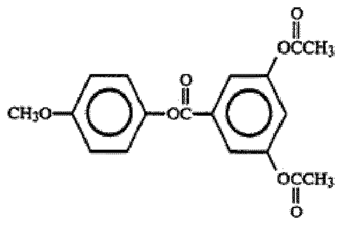

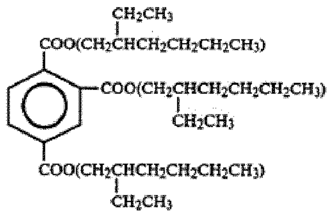

US 2009/118417 and CN101415748 disclose a hyperbranched-polyester comprising at least one kind of a structural unit selected from an aromatic oxycarbonyl unit (P), aromatic and/or aliphatic dioxy units (Q), an aromatic dicarboxy unit (R) and a trifunctional or higher polyfunctional organic residue (B) wherein the content of (B) is within a range of 7.5 to 50 mol% based on the entire monomers constituting the polyester.

US 6,210,872 discloses an optical film formed from a LCP comprising the following recurring units:

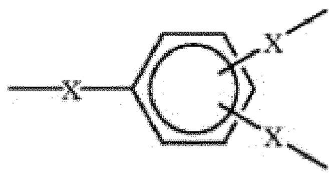

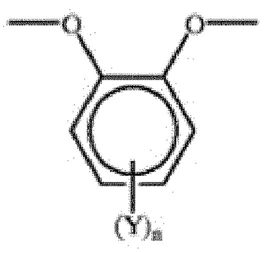

where X represents O or CO independently and Y is independently selected in the group consisting of F, Cl, Br and alkyl groups and n is 0 or 1.

CN 101649044 discloses an all-aromatic liquid crystal polymer, which is characterized by polycondensation reaction of four monomers, p-hydroxybenzoic acid, triptycene hydroquinone, terephthalic acid and isophthalic acid.

CN 116178686 discloses LCPs based on trimesic acid and 4-hydroxybenzoic acid. CN 116178686 does not disclose the polyester of the invention.

CN 103665354 discloses LCPs with Δ = Tm - Tc ≥ 40°C and having a composition different from the polyester of the invention.

CN 103570927 LCPs based on trimesic acid and 4-hydroxybenzoic acid. CN 116178686 does not disclose the polyester of the invention.

US 5,306,800 discloses an LCP with recurring units according to formula below:

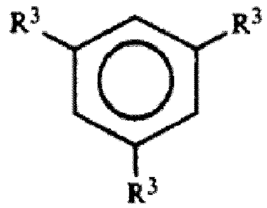

where $R^3$ is selected from NH, CO, O and S. There is no disclosure of a polyester as defined in claim 1.

US 2004/256599 discloses a thermotropic liquid crystalline polymer (LCP), which is obtainable by copolymerizing a trifunctional hydroxynaphthalene carboxylic acid represented by the general formula (I) where one of m and n is 1 and the other is 2, the proportion of which is between 0.01 and 10 mol%:

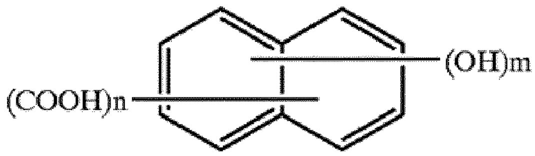

## [Technical problem]

To meet the growing demand for device hyperconnectivity, electronic components have become increasingly intricate to accommodate more complex device design. This increase in device connectivity is facilitated primarily by an increase in data transfer rates and network capacity enabled by 5G cellular networks.

To meet the demands of 5G networks, operating at frequencies up to 100 GHz, dielectric insulating materials must demonstrate low dielectric constants (Dk) and dissipation factors (Df, sometimes referred to as the dielectric loss tangent), ideally below 4.0 and 0.0040, respectively. However, there is a push to drive the Dk and Df values even lower as signal attenuation ($\alpha$) is proportional to both values, see the relationship below ($\alpha$): $\alpha \propto \sqrt{D_k} D_f f$ , where f is the frequency of the signal

Polyimide (PI) films are currently used for dielectric insulator substrates in PCBs and FPCs. These films are traditionally prepared by casting and subsequently heat treating a solution of the polymer solution form as a polymer precursor. The resultant PI films generally have excellent heat resistance and mechanical properties. However, PIs suffer from high moisture uptake. The process of moisture uptake causes a concomitant increase in Df, which is undesirable for performance.

In previous telecommunication applications, this increase in Df was tolerable as it did not affect the performance in the frequency ranges utilized for previous generations of cellular networks. However, in the more demanding 5G space, this performance deterioration with moisture uptake causes enhanced signal dampening at the frequencies utilized by 5G.

LCPs typically result from the polycondensation of aromatic difunctional monomers. The wholly aromatic structure of many commercial LCPs leads to high melting temperatures due to the high chain rigidity, with the tendency to orient in the flow direction and rapidly crystallize after melt processing. For decades, LCPs have been known for their excellent thermal performance and easy processing via injection molding - a result of their low viscosity and high crystallization rate. More recently, LCPs have gained increasing attention due to their exceptional dielectric performance in the GHz frequency range.

Due to the high processing temperatures required for many LCPs, in combination with the chain rigidity and resulting anisotropy under shear-induced flow, it has proven challenging to produce LCP film via a melt process. The difficulty in melt processing LCPs, outside of injection molding, has considerably limited their application.

Therefore, polyesters and LCP compositions possessing the desired thermal and dielectric performance for 5G telecommunication applications, but with improved processability are highly sought after. In this sense, improved processability is taken to mean improved rheological properties (higher viscosity at relevant processing shear rates, higher melt elasticity) and a larger processing window (greater Tm - Tc).

The polyester of the invention aims at solving this technical problem.

## [Brief description of the invention]

The invention is set out in the appended set of claims.

The invention relates to a polyester as defined in any one of claims 1-12.

The invention relates to a polymer composition as defined in claim 13.

The invention relates to a use as defined in claim 14.
The invention relates to a printed circuit board as defined in claim 15.
More details on these subject-matters are provided below.

## [Definitions]

These definitions apply to the present disclosure.
wt% means % by weight. Mol% means % by mol.
Unless otherwise stated, the proportions of units derived from the monomers in the polyester are given in mol% and relative to the total proportion of said units in the polyester.
When numerical ranges are given herein, unless otherwise indicated, the endpoints of the ranges (including the ranges starting with *"between"* and even the open-ended ranges such as those comprising *"at least", "atmost", "lower than",* etc) are included.
In the present application, unless otherwise indicated, any specific embodiment or technical feature relating to one of the subject-matters of the invention is applicable to and interchangeable with another embodiment or technical feature relating also to said subject matter and disclosed elsewhere in the application, notably in the claims.

## [Description of the invention]

### Polyester (PE)

As a first object, the invention relates to a polyester (PE) comprising the following recurring units with the following proportions expressed in mol%:

| | | |
|---|---|---|
| (RU1) | 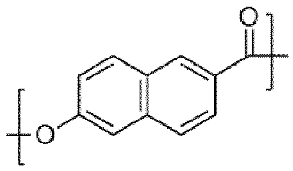 | between 30.0 and 80.0 mol% |
| (RU2) | 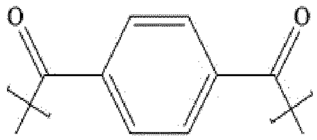 | between 10.0 and 20.0 mol% |
| (RU3) | 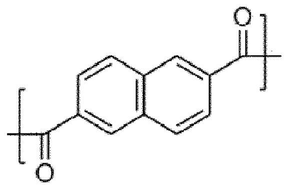 | between 1.0 and 10.0 mol% |
| (RU4) | 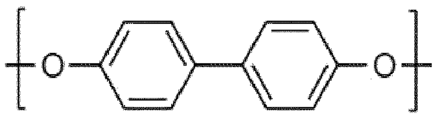 | between 15.0 and 25.0 mol% |

and having in reacted form at least one monomer of formula (I):

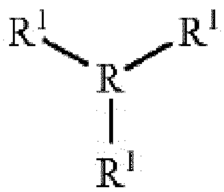

(I)

where $R^1$ is COOH and R is an aryl group, a heteroaryl group or a cycloalkyl group, the proportion of this monomer in the polyester being between 0.10 and 1.0 mol% (this latter value being excluded),
where all the proportions are given in mol% and based on the total amount of recurring units (RU1), (RU2), (RU3), (RU4) and the units derived from the monomer fo formula (I) that are present in the polyester (PE).

The recurring units (RU1)-(RU4) and the monomer of formula (I) are linked by ester bonds.

Because of this composition, the polyester (PE) of the invention is typically designated as a Liquid Crystalline Polyester or LCP. Liquid crystalline polyesters (LCPs) are polyesters that demonstrate order in at least one dimension in the liquid state, *i.e.* anisotropy under conditions suitable for flow. The ordered liquid state of LCPs is often referred to as a the nematic phase, and the transition from an ordered solid to an ordered liquid referred to as the crystalline to nematic transition. For simplicity's sake, this transition will be referred to as the "melting temperature" or "melting point" henceforth. To achieve an anisotropic flow state, LCPs typically must comprise a certain quantity of rigid, linear monomeric units, such as *para*-hydroxybenzoic acid and/or 6-hydroxy-2-naphthoic acid. LCPs based entirely on aromatic monomers (*e.g.*, *para*-hydroxybenzoic acid and/or 6-hydroxy-2-naphthoic acid with comonomers) have the tendency to show excellent thermal stability and flow properties.

The proportion of monomer(s) of formula (I) in reacted form is between 0.10 and 1.0 mol% (this latter value being excluded). This proportion may more particularly be between 0.15 and 0.75 mol%.

The relative proportions of recurring units (RU1)-(RU4) in polyester (PE) may more particularly be the following:

| | | |
|---|---|---|
| (RU1) | 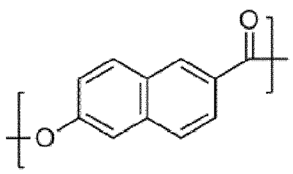 | between 55.0 and 65.0 mol% |
| (RU2) | 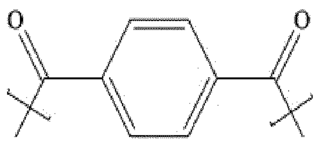 | between 13.0 and 17.0 mol% |
| (RU3) | 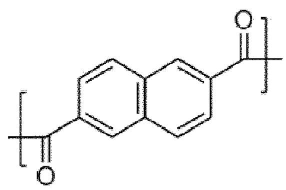 | between 2.0 and 7.0 mol% |
| (RU4) | 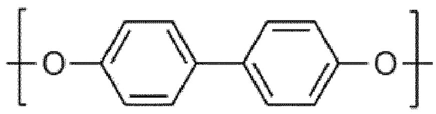 | between 18.0 and 22.0 mol% |

The relative proportions of recurring units (RU1)-(RU4) in polyester (PE) may more particularly be the following:

| | | |
|---|---|---|
| (RU1) | 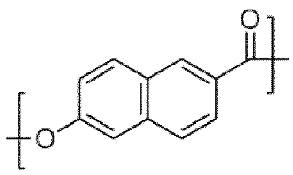 | between 55.0 and 65.0 mol% |
| (RU2) | 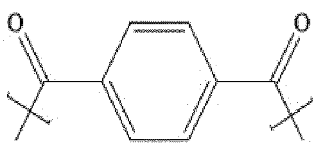 | between 11.0 and 15.0 mol% |

(continued)

| | | |
|---|---|---|
| (RU3) | 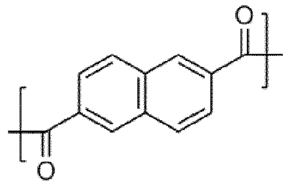 | between 2.0 and 8.0 mol% |
| (RU4) | 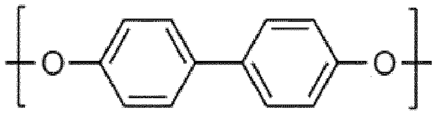 | between 18.0 and 22.0 mol% |

The monomer of formula (I) can be 1,2,4-benzenetricarboxylic acid or 1,3,5-benzenetricarboxylic acid or a combination of these two triacids.

The monomer of formula (I) is preferably trimesic acid of formula:

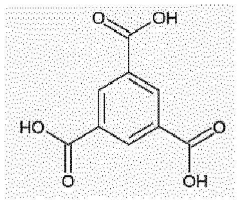

The units forming the polyester (PE) of the invention consist essentially of or consist of the recurring units (RU1), (RU2), (RU3), (RU4) and the units derived from the monomer of formula (I) that are present in the polyester (PE).

The polyester (PE) of the invention preferably does not comprise units derived from any other monomer not complying with formula (I) and having at least three groups X selected in the group consisting of COOH, OH and combination thereof.

The composition of the polyester (PE) can be determined by conventional analytical methods such as $^1H$ NMR.

Another method consists in subjecting the polyester (PE) to hydrolysis under basic conditions and assessing the resultant monomer mixture by $^1H$ NMR or liquid chromatography-mass spectrometry (LC-MS). The method disclosed in the Experimental Section illustrates this other method and can be followed for the analysis of the polyester (PE).

**Preparation of the polyester** (PE)

The polyester (PE) is prepared by polycondensation.

The polyester (PE) is prepared by polycondensing a monomer mixture (MM) comprising, consisting essentially of or consisting of:

- monomer (M1): 6-hydroxy-2-naphthoic acid (HNA);
- monomer (M2): terephthalic acid (TPA);
- monomer (M3): 2,6-napthalene dicarboxylic acid (NDA);
- monomer (M4): 4,4'-biphenol (BP); and
- at least one monomer of formula (I).

The expression *"consist essentially"* means in relation to the monomer mixture (MM) that the monomer mixture (MM) consists of (M1), (M2), (M3), (M4), at least one monomer of formula (I) and up to 2.0 mol%, preferably up to 1.5 mol%, preferably up to 1.0 mol%, preferably up to 0.5 mol% of at least one monomer $M_x$ having two functions $X_1$ and $X_2$ selected in the group consisting of -OH, -COOH, and $-NH_2$, or derivatives thereof, said monomer $M_x$ being different from monomers (M1), (M2), (M3), (M4) and monomer (I).

If desired, the polycondensation may proceed through the acetylation of the monomers as known in the art. The -OH groups of monomers (M1) and (M4) may be partly or totally replaced respectively by -O-C(=O)-Q groups where Q is a $C_1$-$C_6$ linear or branched alkyl group. The replacement OH ==> -O-C(=O)-Q prior to the polycondensation is performed with the use of an acylating agent.

The acylation may conveniently be accomplished by using acetic anhydride as the acylating agent. In such cases where acetic anhydride is used as the acetylating agent, the acylation reaction is referred to as acetylation. Acetylation is

generally initiated at temperatures of about 90° C. During the initial stage of the acetylation, reflux may be employed to maintain vapor phase temperature below the point at which acetic acid byproduct and anhydride begin to distill. Temperatures during acetylation typically range from between 90° C. to 150° C. If reflux is used, the vapor phase temperature typically exceeds the boiling point of acetic acid, but remains low enough to retain residual acetic anhydride. For example, acetic anhydride vaporizes at temperatures of about 140° C. Thus, providing the reactor with a vapor phase reflux at a temperature of from about 110° C to about 130° C is particularly desirable. To ensure substantially complete acetylation, an excess amount of acetic anhydride may be employed. The amount of excess anhydride will vary depending upon the particular acetylation conditions employed, including the presence or absence of reflux. The use of an excess of from about 1 to about 10 mole percent of acetic anhydride, based on the total moles of reactant hydroxyl groups present is not uncommon.

The acylation may be performed *in situ* within the polycondensation reactor vessel or in a separate reactor vessel. When separate reactor vessels are employed, one or more of the monomers may be introduced to the acylation reactor and subsequently transferred to the polycondensation reactor. Likewise, one or more of the monomers may also be directly introduced to the reactor vessel without undergoing pre-acetylation.

The proportion of monomers in the monomer mixture (MM) is such that the molar ratio groups $-OY_1$ from monomers / groups $-COOY_2$ from monomers is between 0.80 and 1.20, preferably between 0.90 and 1.10, even more preferably between 0.95 and 1.05, where $Y_1$ and $Y_2$ designates H and/or - C(=O)-Q.

The polycondensation of the monomer mixture (MM) is performed by heating a reaction mixture (RM) comprising the monomer mixture (MM) at a temperature sufficient to induce the polycondensation of the monomers with the formation of ester bonds. The temperature at which the monomer mixture (MM) is heated is generally at least 150°C.

The reaction mixture (RM) preferably includes a catalyst, e.g. potassium acetate and/or magnesium acetate.

The reaction mixture (RM) is further heated to remove the volatiles. The solid material recovered from the reaction mixture (RM) is generally then further heated under a continuous nitrogen flow to complete the polycondensation. The temperature at which the solid material is further heated is generally at least 250°C.

The conditions given in the experimental section may more particularly be followed to prepare the polyester (PE) of the invention.

The polyester (PE) of the invention can also be characterized by the following physico-chemical properties.

## Melting temperature (Tm)

The polyester (PE) exhibits a melting temperature Tm of at least 295°C. This ensures that the composite film of the invention exhibits thermal resistance.

Tm is preferably at least 300.0°C.

Tm is generally at most 330.0°C.

Tm is measured by Differential Scanning Calorimetry ("DSC") according to ASTM D3418, notably using a heating of 20 °C/min and cooling rate of 10 °C/min.

More particularly, Tm is measured by Differential Scanning Calorimetry ("DSC") according to ASTM D3418 according to protocol (p) defined in the Experimental Section.

## Crystallization temperature (Tc)

The polyester (PE) exhibits a crystallization temperature Tc of at most 280.0°C.

Tc is generally at least 250.0°C.

Tc is measured by Differential Scanning Calorimetry ("DSC") according to ASTM D3418, notably using a heating of 20 °C/min and cooling rate of 10 °C/min.

More particularly, Tc is measured by Differential Scanning Calorimetry ("DSC") according to ASTM D3418 according to protocol (p) defined in the Experimental Section.

The polyester (PE) has interestingly such a low Tc, so that the difference $\Delta$=(Tm - Tc) is at least 40.0°C, preferably at least 41.0°C, preferably at least 42.0°C, preferably at least 43.0°C, preferably at least 44.0°C, preferably at least 45.0°C.

$\Delta$ is preferably at most 60.0°C.

## Rheological properties

The polyester (PE) preferably exhibits the following rheological properties:

- a viscosity V of at least 100 Pa s measured at Tm+25°C, as defined above, and at a shear rate of 100 s-1; and/or
- a storage modulus G' of at least 20.0 kPa measured at Tm+25°C, as defined above, and at a shear rate of 100 s-1.

Viscosity V is typically at most 2500 Pa s at 100 s-1 (measured in the same conditions as mentioned above).
These rheological properties (V and G') are measured using a parallel plate rheometer under oscillatory shear.
The conditions given in the Experimental Section are conveniently followed.

## Polymer composition (PC)

The polymer composition (PC) of the invention comprises, consists essentially of or consists of:

- at least one polyester (PE) as disclosed herein;
- optionally at least one filler (F), notably selected in the group consisting of glass fibers (GF), carbon fibers (CF), silica, alumina, aluminium borate, silicon carbide, mica, talc, clay, titanium oxide, zirconia, kaolin, calcium carbonate, magnesium carbonate, calcium sulfate, barium sulfate, magnesium hydroxide, quartz, graphite, bentonite, calcium phosphate;
- optionally at least one additive (A) different from filler (F) and selected in the group consisting of plasticizers, light and weathering stabilizers, antistatic agents, ultraviolet absorbing agents, dyes, pigments, viscosity agents, impact modifiers and lubricants;

the filler(s) (F) and additive(s) (A) (if any) being blended with the polyester.
The function of the filler (F) is generally to improve the thermal and mechanical properties of the polymer composition (PC).
According to an embodiment, the polymer composition (PC) of the invention comprises, consists essentially of or consists of:

- at least one polyester (PE) as disclosed herein;
- at least one filler (F), notably selected in the group consisting of glass fibers (GF), hollow glass spheres, carbon fibers (CF), dielectric constant modifiers, electrically conductive fillers, silica, alumina, aluminium borate, silicon carbide, mica, talc, clay, titanium oxide, zirconia, kaolin, calcium carbonate, magnesium carbonate, calcium sulfate, barium sulfate, magnesium hydroxide, quartz, graphite, bentonite, calcium phosphate; the filler(s) (F) and additive(s) (A) (if any) being blended with the LCP.

The polymer composition (PC) of the invention may also further comprise at one polymer different from the polyester (PE) of the invention, such as a fluoropolymer.
The proportion of the polyester(s) (PE) of the invention in the polymer composition (PC) is generally between 30.0 and 85.0 wt%. This proportion may be between 45.0 and 75.0 wt% or between 50.0 and 70.0 wt%.
The proportion of additive(s) (A) is generally at most 10.0 wt%. This proportion may more particularly be between 0.1 and 10.0 wt%.
The proportions of components of the polymer composition (PC) are given in wt% relative to the total weight of the polymer composition (PC).
According to an embodiment, the polyester (PE) of the invention or the polymer composition (PC) of the invention is in the form of a film. The thickness of the film may be between 0.010 mm and 10.0 mm, preferably between 0.01 and 1.0 mm, and even more preferably between 0.020 and 0.50 mm.
The polymer composition (PC) is obtained by conventional techniques of blending polymers with additives and fillers. A preferred technique consists in blending the additive(s) and/or filler(s) while the polyester is in the molten state. This is generally performed with the help of an extruder, a kneader or a Banbury mixer. The polymer composition (PC) is preferably prepared by melt processing the polyester and the components of the polymer composition in an extruder.

## End-use applications of the polyester (PE) or the polymer composition (PC) of the invention

The polyester (PE) or the polymer composition (PC) in the form of a film can be used as the dielectric material in printed circuit boards (PCBs). The invention thus also relates to the use of the LCP or the polymer composition (PC) of the invention, notably in the form of a film, for the preparation of a printed circuit board (PCB).
More specifically, for PCBs used in high-frequency transmission modules/components such as 5G-compatible antennas or mobile devices. More specifically, films of these compositions may be prepared via melt extrusion to produce dielectric insulating substrates for flexible printed circuit boards (FPCs). FPCs with the appropriate dielectric properties have application in mobile electronic devices, 5G antenna arrays, 5G base stations, flexible electronic devices, wearable electronic devices, automobiles, and medical devices that require high-speed data transmission.
Other applications may include parts, made by injection molding or other common melt processing techniques, for high performance, 5G-compatible connectors or housing for telecommunication or electronic components such as an

antennas or components thereof.

## [EXPERIMENTAL SECTION]

The disclosure will be now described in more detail with reference to the following examples disclosed in **Table III.**

## Starting Materials

**Table I**

| Name | Alias | RN CAS |
|---|---|---|
| 6-Hydroxy-2-naphthoic acid | HNA | 16712-64-4 |
| Terephthalic acid | PTA | 100-21-0 |
| 2,6-Naphthalenedicarboxylic acid | NDA | 1141-38-4 |
| 4,4'-Biphenol | BP | 92-88-6 |
| Acetic anhydride | $Ac_2O$ | 108-24-7 |
| Trimesic acid | | 554-95-0 |
| Potassium acetate | KOAc | 127-08-2 |
| Magnesium acetate tetrahydrate | $Mg(OAc)_2$ | 16674-78-5 |

## Preparation of polyester

A 2 L glass kettle was charged with PTA (102.9 g, 0.7277 mol), NDA (78.6 g, 0.363 mol), HNA (631.2 g, 3.354 mol), BP (218.6 g, 1.174 mol), trimesic acid (5.7157 g, 0.028518 mol). A glass head equipped with a mechanical stirrer, nitrogen inlet, and distillate adapter equipped with a stopcock was placed on the kettle and the kettle was put under positive nitrogen pressure, visualized by mineral oil bubbler. Subsequently, $Ac_2O$ (628.9 g, 6.160 mol) was charged and the reaction was set to stir. KOAc (0.01738 g) and $Mg(OAc)_2$ (0.2563 g) were charged as catalysts. The mixture was then heated to an internal temperature of 135 °C to begin reflux to facilitate monomer acetylation. The reflux was held for 2 h, after which the stopcock on the distillate adapter was opened to begin collection of the distillated vapor. The internal temperature was then increased at a rate of 0.5 °C/min to 320 °C while continuously distilling the acetic acid byproduct. The polymerization was stopped once 96 % of the theoretical distillate yield was obtained. The resulting prepolymer was cooled to room temperature, discharged, and ground to a powder for subsequent solid-state advancement.

The prepolymer was solid-state advanced in a rotary oven (Grieve Corp.) by heating to a set point of 300 °C over the course of 8 h and holding at the 300 °C set point for 4 h with continuous nitrogen flow throughout the process. The resulting powder was discharged and analyzed "as-is".

## Test methods

### Rheological properties

Viscosity and modulus were determined with an ARES G2 rheometer equipped with 25 mm diameter stainless steel parallel plates. Data were acquired at Tm + 25 °C, unless otherwise stated, using an oscillatory frequency sweep at constant strain, within the linear viscoelastic region. The linear viscoelastic region was determined by first performing a strain amplitude sweep at 340 °C, per ASTM D4440.

## Thermal properties

| Protocol (p) |
|---|
| Thermal properties were measured by DSC under nitrogen flow per ASTM D3418. The LCP powder samples were subject to a heat, cool, heat, cool cycle from 200-360 °C. The heating rate for the heat portion of the cycles was 20 °C/min and the cooling rate was 10 °C/min for the cool portion of the cycles. The melting temperature (Tm) is reported as the peak of the endothermic transition from the second heat portion of the cycle and the crystallization temperature (Tc) is reported as the peak of the exothermic transition on the first cool portion of the cycle. |

The DSC used is a TA Instruments QA20-2 or TA Instruments DSC250.

Dielectric performances (Dk, Df)

The microwave dielectric properties were measured using a Split Cylinder Resonator operating at 20 GHz frequency on compression molded samples according to IPC-TM-650-2-5-5-13. Samples were compression molded with a 90x90 mm square stainless steel shim with a thickness of 0.18 mm using a Carver hydraulic press pre-heated to 330 °C. The molding procedure followed a press/release/press cycle wherein the material was molded with 2 MT applied force applied for 45 s, followed by a brief release of the force, and a subsequent second application of 2 MT of force for 45 s. The compression molded samples were dried at 100 °C for 1 h prior to testing. Data is reported as the average of three compression molded samples.

Digestion and analysis of the polyester (PE)

Digestion: the sample of polyester was weighed to approximately 40 mg and transferred to a glass culture tube equipped with a stir bar. The sample mass was accurately recorded. The culture tube was charged with DMSO (4 mL) and 5 N aqueous KOH solution (1 mL). The exact masses of each reagent were recorded after addition. The solution was then heated to 120 °C while stirring for 30 min. The sample was cooled to room temperature, neutralized with 85 wt. % phosphoric acid (6 mL), and further diluted with DMSO (30 mL). The exact mass of each reagent was recorded after addition. The sample was homogenized using a vortex mixer and an aliquot (15 mL) was transferred to a conical centrifuge tube and centrifuged for 10 min. The supernatant was transferred to an LC vial and diluted by a factor of 10 for analysis.

Analysis: LC data were acquired using an Agilent 1290 UPLC equipped with an ACQUITY HSS PFP column (1.8 μm, 2.1 × 150 mm) and photodiode array detector monitoring the 190-500 nm region. The column compartment was maintained at 40 °C and a flow rate of 0.350 mL/min was employed using the gradient shown in **Table II**. Mobile phase A is comprised of 0.1 % formic acid in water and mobile phase B, acetonitrile. A sample volume of 2 μL was used for the sample injection.

**Table II**

| Time (min.) | % A | % B |
|---|---|---|
| 0.00 | 95 | 5 |
| 1.00 | 95 | 5 |
| 13.00 | 0 | 100 |
| 15.00 | 0 | 100 |
| 15.50 | 95 | 5 |
| 20.00 | 95 | 5 |

**Table III**

| Ex. | Proportions of monomers in mol% | | | | | Thermal properties (°C) | Rheology @ Tm+25°C °C & 100 1/s | Dk<br>Df |
|---|---|---|---|---|---|---|---|---|
| | HNA | PTA | NDA | BP | Trimesic acid | Tm<br>Tc<br>Tm-Tc | V (Pa s)<br>G' (kPa) | |
| E1 | 59.7 | 15.0 | 4.4 | 20.4 | 0.5 | 315°C<br>269°C<br>46°C | 1445<br>138 | 3.35<br>0.0013 |
| E2 | 59.4 | 12.9 | 6.4 | 20.8 | 0.5 | 300°C<br>255°C<br>45°C | | |

As can be seen with the results in **Table III,** the polyester of the invention makes it possible to have a combination of the following properties:

- an improved processing window (Δ ≥ 40°C) while maintaining a sufficiently high Tm for Surface Mount Technology (SMT) compatibility;
- a greater storage modulus for a given viscosity at shear rates relevant to film extrusion (100 1/s);
- dielectric properties that are suitable for 5G applications: Dk ~3.2-3.5 and Df < 0.002.

## Claims

1. Polyester (PE) comprising the following recurring units (RU1)-(RU4) with the following proportions expressed in mol%:

| | | |
|---|---|---|
| (RU1) | 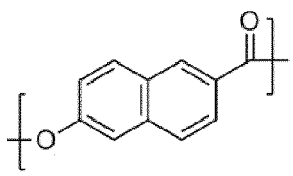 | between 30.0 and 80.0 mol% |
| (RU2) | 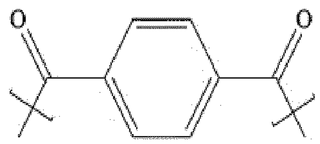 | between 10.0 and 20.0 mol% |
| (RU3) | 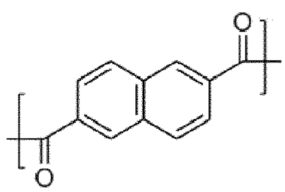 | between 1.0 and 10.0 mol% |
| (RU4) | 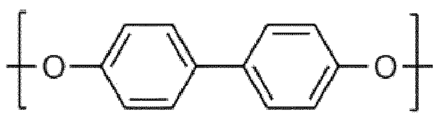 | between 15.0 and 25.0 mol% |

and having in reacted form at least one monomer of formula (I):

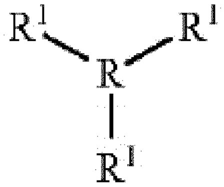

(I)

where $R^1$ is COOH and R is an aryl group, a heteroaryl group or a cycloalkyl group, the proportion of this monomer in the LCP being between 0.10 and 1.0 mol% (this latter value being excluded),
where all the proportions are given in mol% and based on the total amount of recurring units (RU1), (RU2), (RU3), (RU4) and the units derived from the monomer of formula (I) that are present in the polyester (PE).

2. Polyester (PE) according to claim 1, wherein the proportion of monomer of formula (I) in reacted form is between 0.15 and 0.75 mol%.

3. Polyester (PE) according to claim 1 or 2, wherein the proportions of the recurring units (RU1)-(RU4) are the following ones:

| | | |
|---|---|---|
| (RU1) | 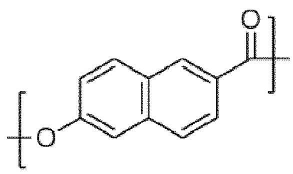 | between 55.0 and 65.0 mol% |
| (RU2) | 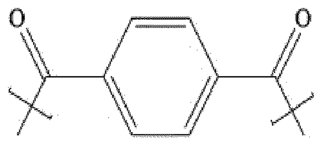 | between 13.0 and 17.0 mol% |
| (RU3) | 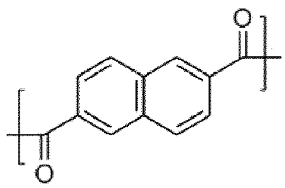 | between 2.0 and 7.0 mol% |
| (RU4) | 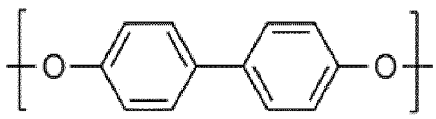 | between 18.0 and 22.0 mol% |

or the following ones:

| | | |
|---|---|---|
| (RU1) | 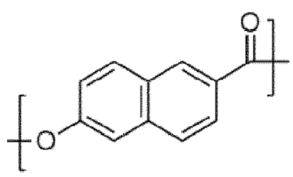 | between 55.0 and 65.0 mol% |
| (RU2) | 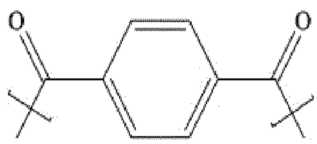 | between 11.0 and 15.0 mol% |

(continued)

| | | |
|---|---|---|
| (RU3) | 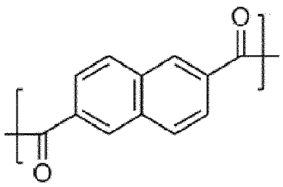 | between 2.0 and 8.0 mol% |
| (RU4) | 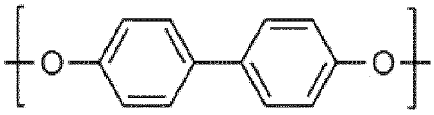 | between 18.0 and 22.0 mol% |

**4.** Polyester (PE) according to any one of the preceding claims, wherein the monomer of formula (I) is 1,2,4-benzenetricarboxylic acid or 1,3,5-benzenetricarboxylic acid or a combination of these two triacids.

**5.** Polyester (PE) according to any one of the preceding claims, exhibiting a melting temperature Tm which is:

- at least 295.0°C; and/or
- at most 330.0°C;

Tm being measured by Differential Scanning Calorimetry ("DSC") according to ASTM D3418 according to protocol (p) defined in the Experimental Section.

**6.** Polyester (PE) according to any one of the preceding claims, exhibiting a crystallization temperature Tc which is:

- at least 250.0°C; and/or
- at most 280.0°C;

Tc being measured by Differential Scanning Calorimetry ("DSC") according to ASTM D3418 according to protocol (p) defined in the Experimental Section.

**7.** Polyester (PE) according to any one of the preceding claims, exhibiting a melting temperature Tm and a crystallization temperature Tc such that the difference $\Delta$=(Tm - Tc) is at least 40.0°C, preferably at least 41.0°C, preferably at least 42.0°C, preferably at least 43.0°C, preferably at least 44.0°C, preferably at least 45.0°C; and preferably at most 60.0°C, Tm and Tc being measured by Differential Scanning Calorimetry ("DSC") according to ASTM D3418 according to protocol (p) defined in the Experimental Section.

**8.** Polyester (PE) according to any one of the preceding claims, exhibiting the following rheological properties:

- a viscosity V of at least 100 Pa s measured at Tm+25°C and at a shear rate of 100 s-1; and/or
- a storage modulus G' of at least 20.0 kPa measured at Tm+25°C and at a shear rate of 100 s-1;

these rheological properties (V and G') being measured using a parallel plate rheometer under oscillatory shear.

**9.** Polyester (PE) according to any one of the preceding claims, prepared by polycondensing a monomer mixture (MM) comprising, consisting essentially of or consisting of:

- monomer (M1): 6-hydroxy-2-naphthoic acid (HNA);
- monomer (M2): terephthalic acid (TPA);
- monomer (M3): 2,6-napthalene dicarboxylic acid (NDA);
- monomer (M4): 4,4'-biphenol (BP); and
- at least one monomer of formula (I);

where the -OH groups of monomers (M1) and (M4) are optionally partly or totally replaced by -O-C(=O)-Q groups where Q is a $C_1$-$C_6$ linear or branched alkyl group, preferably Q is Me.

**10.** Polyester (PE) according to any one of the preceding claims, wherein the units forming the polyester consist essentially of or consist of the recurring units (RU1), (RU2), (RU3), (RU4) and the units derived from the monomer of formula (I) that are present in the polyester (PE).

**11.** Polyester (PE) according to any one of claims 1-9, wherein the polyester does not comprise units derived from any other monomer not complying with formula (I) and having at least three groups X selected in the group consisting of COOH, OH and combination thereof.

**12.** Polyester (PE) according to any one of claims 1-9 in the form of a film.

**13.** Polymer composition (PC) of the invention comprises, consists essentially of or consists of:

- at least one polyester (PE) as disclosed in any one of claims 1-11;
- optionally at least one filler (F), notably selected in the group consisting of glass fibers (GF), carbon fibers (CF), silica, alumina, aluminium borate, silicon carbide, mica, talc, clay, titanium oxide, zirconia, kaolin, calcium carbonate, magnesium carbonate, calcium sulfate, barium sulfate, magnesium hydroxide, quartz, graphite, bentonite, calcium phosphate;
- optionally at least one additive (A) different from filler (F) and selected in the group consisting of plasticizers, light and weathering stabilizers, antistatic agents, ultraviolet absorbing agents, dyes, pigments, viscosity agents, impact modifiers and lubricants;

the filler(s) (F) and additive(s) (A) (if any) being blended with the polyester (PE).

**14.** Use of the polyester (PE) as defined in any one of claims 1-11 or the polymer composition (PC) as defined in claim 13, notably in the form of a film, for the preparation of a printed circuit board (PCB).

**15.** Printed circuit board (PCB) comprising the polyester (PE) as defined in any one of claims 1-11 or the polymer composition (PC) as defined in claim 13, notably in the form of a film.

Europäisches Patentamt
European Patent Office
Office européen des brevets

# EUROPEAN SEARCH REPORT

Application Number
EP 24 16 0049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 178 686 A (KINGFA SCIENCE & TECHNOLOGY CO ET AL.) 30 May 2023 (2023-05-30) * paragraph [0005]; example 2; table 1 * ----- | 1-15 | INV. C08G63/60 |
| X | WO 99/52978 A1 (DU PONT [US]) 21 October 1999 (1999-10-21) * example 8; table II * ----- | 1-15 | |

TECHNICAL FIELDS SEARCHED (IPC)

C08G

The present search report has been drawn up for all claims

1

| Place of search | Date of completion of the search | Examiner |
|---|---|---|
| The Hague | 15 July 2024 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 16 0049

This annex lists the patent family members relating to the patent documents cited in the above-mentioned European search report. The members are as contained in the European Patent Office EDP file on
The European Patent Office is in no way liable for these particulars which are merely given for the purpose of information.

15-07-2024

| Patent document cited in search report | Publication date | Patent family member(s) | Publication date |
|---|---|---|---|
| CN 116178686 A | 30-05-2023 | NONE | |
| WO 9952978 A1 | 21-10-1999 | CA 2327674 A1 | 21-10-1999 |
| | | CN 1296508 A | 23-05-2001 |
| | | DE 69908764 T2 | 29-04-2004 |
| | | EP 1068264 A1 | 17-01-2001 |
| | | JP 4880119 B2 | 22-02-2012 |
| | | JP 5340225 B2 | 13-11-2013 |
| | | JP 2002511513 A | 16-04-2002 |
| | | JP 2010196074 A | 09-09-2010 |
| | | KR 20010042472 A | 25-05-2001 |
| | | US 6294618 B1 | 25-09-2001 |
| | | US 2002013424 A1 | 31-01-2002 |
| | | WO 9952978 A1 | 21-10-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10654969 B
- US 4710547 A
- US 2009118417 A
- CN 101415748
- US 6210872 B
- CN 101649044
- CN 116178686
- CN 103665354
- CN 103570927
- US 5306800 A
- US 2004256599 A